# EUROPEAN PATENT SPECIFICATION

(11) **EP 0 361 780 B1**
(45) Date of publication and mention of the grant of the patent: **28.07.1993**
(21) Application number: 89309588.5
(22) Date of filing: 20.09.1989
(51) Int. Cl.: B41J 3/44, B41J 2/525

(54) **Text and color printing system**
Drucksystem für Text und Farbe
Système d'impression de texte et de couleur

(30) Priority: 23.09.1988 US 248886
(43) Date of publication of application: 04.04.1990
(73) Proprietor: Hewlett-Packard Company, Palo Alto, California 94304 (US)
(72) Inventor: Anderson, Stephen R., Mountain View California 94040 (US); Chen, Wen-Tsing, Cupertino California 95014 (US); Ertel, John P., Portola Valley California 94025 (US); Holland, William D., Palo Alto California 94306-2810 (US); Jamp, Rueiming, Los Altos, CA 94022 (US); Labarre, Lawrence, Mountain View California 94043 (US); Lee, Steven W., Palo Alto California 94306 (US); Vincent, Kent D., Cupertino California 95014 (US)
(74) Representative: Colgan, Stephen James

(56) References cited:
- US-A- 3 889 592
- PATENT ABSTRACTS OF JAPAN vol. 10, no. 191 (M-495)(2247), 4th July 1986; & JP-A61 035 253
- PATENT ABSTRACTS OF JAPAN vol. 5, no. 105 (M-77)(777), 8th July 1981; JP-A-56 49283
- PATENT ABSTRACTS OF JAPAN vol. 10, 375 (M-545)(2432), 13th December 1986 & JP-A61 167 581

## Description

### BACKGROUND OF THE INVENTION

### Technical Field

The present invention generally relates to printing systems and, more particularly, to text and graphics printing systems for use with microprocessor-based computers.

### BACKGROUND ART

In conjunction with microprocessor-based computers, it is well known to employ so-called "desktop" printers that provide multi-color graphics. However, conventional desktop color printers have several shortcomings. For example, color printers of the electrophotographic type require complex and expensive mechanisms to sequentially form and align color frames. While some desktop color printing technologies, such as inkjet, are less complex than electrophotographic printing, those technologies do not provide the line acuity and speed desired for printing document quality text. On the other hand, high-quality monochrome text printing technologies for desktop use, notably laser printers, do not provide high-quality color graphics. Thus, it can be said that conventional desktop printers generally either print high-quality monochrome text or high-quality color graphics, but not both, at high speeds and low cost.

Accordingly, there exists a need for low-cost, high-speed desktop printers that can be used with microprocessor-based computers to print high-quality color graphics as well as high-quality monochrome text. The present invention, as explained in the following detailed description and accompanying drawings, provides a desktop printing system to satisfy the above-stated need.

### SUMMARY OF THE INVENTION

To satisfy the above-stated need, the present invention provides a printing system for use with a microprocessor-based computer for sequentially printing color graphics and monochrome text on sheets as defined in claim 1. The color printer can be, for example, of the inkjet type, the thermal transfer type, or the electrophotographic type. The monochrome text printer is preferably a laser-type printer.

In one preferred embodiment, the color printer prints color graphics on sheets with generally incremental motion and includes a color graphics printing station, a sheet drying station, and sheet transport means which transports sheets in one direction through the dryer prior to printing and transports sheets in the opposite direction during and after color printing.

Further, the present invention provides a method for sequentially printing color graphics and monochrome text on sheets, as defined in claim 16.

### BRIEF DESCRIPTION OF THE DRAWINGS

In the drawings:
FIGURE 1 is a perspective view of one embodiment of a text and color graphics printing system according to the present invention;
FIGURE 2 is a cutaway pictorial view that illustrates one embodiment of a color printer for use in the system of FIGURE 1;
FIGURE 3 is a side view, partially cutaway, of a color printer including a paper path extender for use in the system of FIGURE 1; and
FIGURE 4 is a schematic diagram of one embodiment of a system for controlling the system of FIGURE 1.

### DETAILED DESCRIPTION OF THE PREFERRED EMBODIMENT

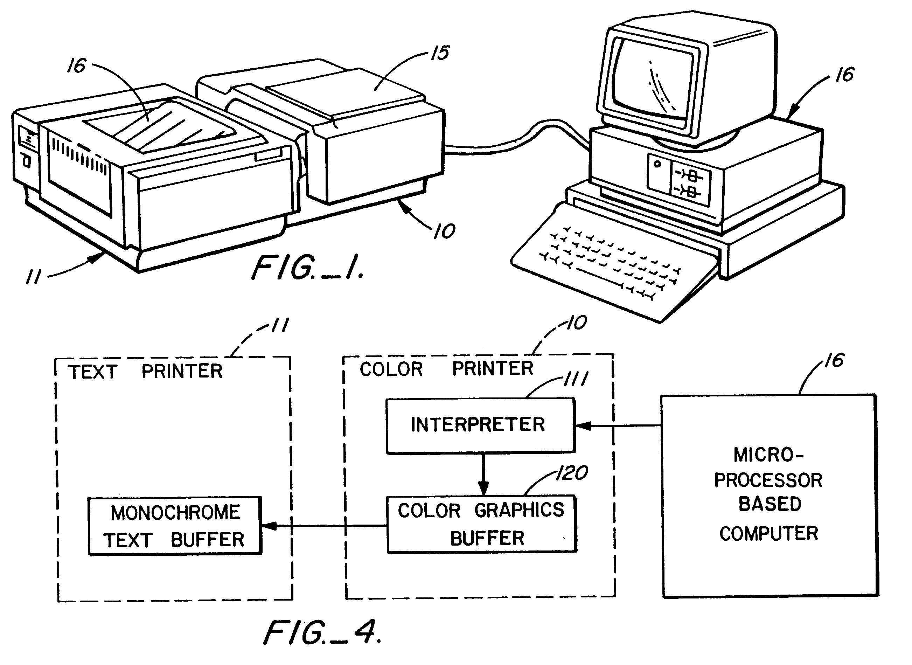

FIGURE 1 generally shows a printing system comprising the modular combination of a color printer 10 operatively connected to a monochrome text printer 11 by a paper path extension 14. The illustrated system has a sheet input cartridge 15 at color graphics printer 10 and a sheet output station 16 at text printer 11. It should be understood that paper path extender 14 replaces the input paper tray normally used with text printer 11 and is removably disengageable from the text printer. It should also be understood that color printer 10 and monochrome text printer 11 are connected for control by a microprocessor-based computer 16.

In the preferred embodiment, color printer 10 is a self-contained unit whose print engine can be based on one of several technologies for printing color graphics. For example, color printer 10 can be a four-color inkjet printer, a thermal transfer printer, or electrophotographic printer to print color graphics. Typically, color printer 10 prints with incremental motion of a sheet of media, normally paper, and has the capability to optionally print monochrome text. (As used herein, the term monochrome means a single color which, in practice, is usually black.)

Monochrome text printer 11, likewise, is a conventional self-contained unit, such as, for example, a laser printer. Typically, text printer 11 prints monochrome text on sheets with continuous motion. Such continuous printing is provided, for example, in the Hewlett-Packard Laser Jet I and Laser Jet II printers available from Hewlett-Packard Corporation of Palo Alto, California.

Operation of the system of FIGURE 1 will now be generally described. Normally color printer 10 extracts sheets one-by-one from cartridge 15, then prints only color graphics on each of the extracted sheets and, finally, delivers the color printed sheets sequentially to paper path extension 14. Then text printer 11 sequentially extracts sheets from extension 14, prints only monochrome text on the sheets and delivers finished pages, containing both monochrome text and color graphics, to output station 16.

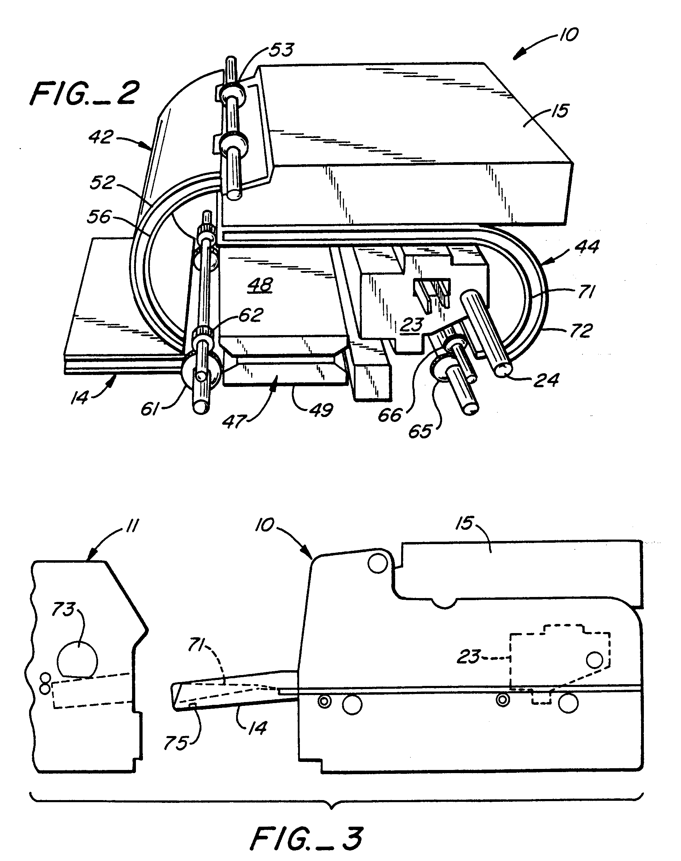

FIGURE 2 shows one embodiment of color printer 10 for use in the above-described system. In this embodiment, color printer 10 employs an ink-jet type print engine 23 which is mounted for translational motion on a guide bar 24. It should be understood that guide bar 24 is fixed to extend perpendicular to the direction of travel of a sheet through printer 10 and that a conventional drive mechanism, not shown, is connected to drive print engine 23 to reciprocate with back-and-forth motion along on the guidebar.

Further in the embodiment illustrated in FIGURE 2, color printer 10 includes curved guide systems, generally designated by the numbers 42 and 44, which guide individual sheets back and forth past print engine 23 and then deliver the sheets to paper path extension 14. In the preferred embodiment, printer 10 also includes a dryer, generally designated by number 47, which heats sheets both before and after they are printed by print engine 23. The illustrated dryer 47 comprises parallel heater plates 48 and 49 that extend laterally across the width of the printer. Dryer 47 should also be understood to include guide members, not shown, which guide individual sheets between heater plates 48 and 49 without contacting at least the upper plate. In practice, the temperature of heater plates 48 and 49 is thermostatically controlled so that the printed sheets are not adversely affected by heat from the dryer.

Operation of color printer 10 of FIGURE 2 will now be described. As the first step, a sheet of paper is extracted from cartridge 15 by pick-up rollers 53 and directed into guide system 42 between curved guide plates 55 and 56. At the end of the path defined by the guide plates 55 and 56, a sheet is engaged by secondary feed wheels 61 and pinch rollers 62 and driven generally continuously, not incrementally, between dryer plates 48 and 49 of dryer 47. In dryer 47, water absorbed by the sheet is evaporatively removed to prestabilize the sheet, i.e., to improve the sheet's dimensional stability for the purpose of enhancing print quality. Then, the leading edge of the sheet is driven below print engine 23 which, during this direction of sheet travel, does not print. Next, the sheet is engaged by main drive wheels 65 and associated pinch rollers 66. Normally, secondary feed wheels 61 release the sheet just as primary feed wheels 65 engage the sheet. Disengagement can be accomplished, for example, by photoelectrically detecting the presence of the sheet at primary feed wheels 65 and then using signals from the photoelectric detector to actuate a solenoid to release secondary pinch rollers 66.

As the next step in the operation of color printer 10 of FIGURE 2, primary feed wheels 65 drive the sheet upwardly between curved plates 71 and 72 of curved guide system 44 until the trailing edge of the sheet reaches primary feed wheels 65. Then, the direction of sheet travel is reversed and primary feed wheels 65 drive the sheet downwardly toward print engine 23 and dryer 47. On this return path, printing of color graphics begins as the sheet passes beneath print engine 23. In usual practice, primary feed wheels 65 incrementally index a sheet between each change in printing direction of print engine 23 and the incremental indexing distance equals the ink swath width so that an apparently continuous color graphics images are formed longitudinally along the sheet even though motion of the sheet is incremental. As the sheet is indexed beneath print engine 23, the leading edge of the sheet advances between dryer plates 48 and 49. In dryer 47, ink on the sheet is dried sufficiently that the color graphics are not smeared when the sheet is engaged by secondary feed wheels 61 and by the drive means of subsequent text printer 11.

As sheets individually leave dryer 47, secondary feed wheels 61 direct the sheets into paper path extension 14. More particularly, in the illustrated embodiment, secondary feed wheels 61 re-engage the leading edge of a sheet just as the trailing edge of the sheet is disengaged by primary feed wheels 65. Then, secondary feed wheels 61 drive the sheet onto extension 14 until the leading edge of the sheet reaches an appropriate position for pick-up by text printer 11, whereupon secondary feed wheels disengage the sheet.

FIGURE 3 shows color printer 10 disengaged from monochrome text printer 11 in order to display paper path extension 14. In the preferred embodiment, extension 14 is an open tray-like device that is configured to be accepted by text printer 11 just as its normal input paper tray. However, paper path extension 14 differs from conventional paper trays in that it is specifically designed to hold only a single sheet rather than multiple sheets. For that purpose, extension 14 can include, for example, a selectively pivotal false bottom member 71 which is spring biased to present a single sheet to extraction roller 73 in text printer 11.

Mounted within extension 14 is one or more photosensors 75 to detect when a sheet has been delivered to the extension and when a sheet has been picked up from the extension by text printer 11. Where there is a difference in operating speeds between color printer 10 and text printer 11, signals from photosensors 75 are used to inhibit operation of color printer 10 so that two sheets do not occupy extension 14 at the same time. That is, signals from photosensor 75 are used to prevent color printer 10 from printing a second sheet while a first sheet remains in extension 14 awaiting pickup by text printer 11.

As relates to color printer 10, paper path extension 14 is designed to replace the conventional output tray without modification to the printer. Thus, the exact configuration of paper path extension 14 will differ depending upon the make and model of the color printer to which it is mated. Likewise, the exact configuration of paper path extension 14 will differ depending upon the make and model of the text printer which is to receive the extension.

FIGURE 4 shows a system for electronically controlling color graphics printer 10 and text printer 11 to print information provided by the microprocessor-based computer 16. Preferably, the printing control circuitry is located within color printer 10. By so locating the control circuitry, text printer 11 can be connected to color printer 10 in the same manner as it would otherwise be connected to computer 16 and, also, computer 16 can be connected only to color printer 10.

In the system of FIGURE 4, an interpreter 111 is preferably, but not necessarily, located in the program memory of color graphics printer 10 and connected to computer 16 by, for example, a Centronics parallel interface port. The interpreter 111 can be, for example, a programmable microprocessor such as a Motorola 68000 microprocessor. Further in the system, interpreter 111 is connected to a first data storage buffer 120 in color printer 10 and to a second data storage buffer 121 in text printer 11.

In operation of the control system of FIGURE 4, interpreter 111 receives data from computer 16 for both color printer 10 and text printer 11. Concurrently, interpreter 111 segregates the data into color graphic and monochrome text components. Normally, such segregation is accomplished by reading Printer Command Language (PCL) commands which are issued by computer 16 when it outputs blocks of text and graphics data. (Typically, each block of data is normally preceded by a command header that designates the size and data type of the block.) After data is segregated into monochrome and color components, interpreter 111 directs the color components to storage buffer 120 in color printer 10 and directs the monochrome components to storage buffer 121 in text printer 11. Then, the monochrome and color data are used by text printer 10 and color printer 11, respectively, as previously described.

In the preferred embodiment, interpreter 111 also controls color printer 10 and the printing sequence. The printing sequence can be controlled, for example, by using "end of page" commands to initiate text printing.

It can now be appreciated that the above-described modular combination of color printer 10 and text printer 11 provides both high-quality color graphics and high-quality text on the same sheet without sacrificing printing speed. Also, a user of the system can selectively use either of the printers without the other by merely detaching the paper path extender 14. Still further, the system allows an owner of a text printer to easily upgrade to a text-and-color system by simply adding a color printer with a paper path extension without having to purchase a combination text-and-color printer.

While the present invention has been illustrated and described in accordance with a preferred embodiment, it should be recognized that variations and changes may be made therein without departing from the invention as set forth in the following claims. For example, although color printer 10 precedes laser printer 11 in the system of FIGURE 1, the sequence can be reversed. Also, although color printer 10 has been described as typically printing with incremental motion of the printed media, the printer could be of the type which prints color graphics with continuous motion.

## Claims

1. A printing system for use with one or more microprocessor-based computers (16) for printing color graphics and monochrome text on sheets, comprising:
a color printer (10) for printing color graphics; and
a text printer (11) for printing text; characterised in that the said system further comprises:
interconnector means (14), which detachably connects the color and text printers, for transporting sheets to be printed on from one printer to the other;
interpreter means (111) for receiving printing information from a microprocessor-based computer and for segregating the printing information into color information and monochrome information; and
control means to control the color printer (10) to print color information and to control the text printer (11) to print only monochrome information such that the graphics and text information is printed on the same sheets, the sheets being transported from one printer to the other between printing operations.

2. A printing system according to claim 1 wherein the color printer (10) is a printer of the inkjet type, thermal transfer type or electrophotographic type.

3. A printing system according to claim 1 or 2, wherein the text printer (11) is a laser printer.

4. A printing system according to any of claims 1 to 3, wherein the control means is connected to the interpreter means (111) and includes sensor means (75) for sensing travel of a sheet on the interconnection means (14) for providing signals inhibiting printing by the text printer.

5. A printing system according to any of claims 1 to 4 wherein the color printer (10) prints color graphics information with incremental motion and the text printer (11) prints text with continuous motion.

6. A printing system according to any of claims 1 to 5 wherein the interconnection means (14) is adapted to hold only a single sheet to be printed.

7. A printing system according to any of claims 1 to 6 wherein the color printer precedes or succeeds the text printer.

8. A printing system according to any of claims 1 to 7 wherein the interpreter means (111) comprises a microprocessor located within the color printer (10), and which further includes an interpreter and first and second data storage buffers connected to the interpreter to store, respectively, color print information and monochrome text information.

9. A printing system according to any of claims 1 to 8 wherein said printing system prints sequentially with a single microprocessor-based computer, or serially with a plurality of microprocessor-based computers.

10. A printing system according to any of claims 1 to 9 wherein the color printer (10) includes a sheet drying means (47) operative to dry a sheet either prior to printing or connected to dry a sheet after printing as well as before printing.

11. A printing system according to claim 10 wherein the color printer includes sheet transport means (61,62,65,66) connected to transport a sheet through the drying means (47) in one direction prior to printing and in the opposite direction during and after printing.

12. A printing system according to any of claims 1 to 11, wherein the interpreter means (111) segregates color information from monochrome information and uses only color information for printing in the color printer and only monochrome information for printing in the text printer.

13. A printing systems according to any of claims 1 to 12 wherein the control means includes at least one sensor (75) for sensing travel of sheets on the interconnection means and for signaling the text printer to inhibit printing operations.

14. A printing system according to claim 11 wherein the sheet transport means incrementally indexes sheets through the color printer in the printing direction and continuously feeds sheets in the non-printing direction.

15. A printing system according to claim 10 wherein the drying means (47) includes parallel plates (48,49) mounted to heat opposed sides of a travelling sheet.

16. A method for use with one or more microprocessor-based computers (16) for printing color graphics and monochrome text characterised by:
segregating printing information into color graphics information and text information; providing only the text information to a text printer (111) for printing and only the color graphics information to a color printer (10) for printing;
feeding a sheet into a first one of the printers;
executing a first printing operation on the sheet in the first one of the printers;
delivering the sheet from the first one of the printers to the second one of the printers; and
executing a second printing operation on the sheet in the second one of the printers.

17. A method according to claim 16, wherein said method is used with microprocessor-based computers for separately printing said colour graphics and text in response to commands from the microprocessor-based computer, and wherein said first and second printing operations are carried out in response to commands from the microprocessor based computer.

18. A method according to any of claims 16 to 18 wherein the color printer (10) prints incrementally and the text printer (11) prints continuously.

19. A method according to any of claims 16 to 19 wherein a sheet is heated in the color printer both before and after printing.

20. A method according to any of claims 16 to 20 wherein the color printer (10) prints with an inkjet engine or by thermal transfer or by an electrographic technique.

21. A method according to any of claims 16 to 21 wherein the text printer (11) prints by a laser printing technique.

22. A method according to any of claims 16 to 22 wherein color graphics and monochrome text sheets are sequentially printed, the first printer being a color printer, further comprising the steps of:
thermally pre-stabilizing the sheet in said color printer (10);
controlling printing information to print only color graphics on the sheet in the color printer;
after printing color graphics, heating the printed sheet sufficiently to avoid ink smearing when the sheet is contacted by a drive wheel;
driving the heated sheet from the color printer to a text printer (11); and
controlling printing information to print only monochrome text on the sheet in the text printer, thereby producing a sheet having both text and graphics printed thereon.

23. A method according to any of claims 16 to 23 including the steps of:
transporting sheets generally continuously in one direction through a dryer (47) prior to color printing and incrementally indexing sheets through the dryer in the opposite direction during and after color printing.

24. A printing system according to claim 1 wherein the interconnector means (14) comprises
a tray adapted at one end for connection to an output station of one of the two printers and also adapted at its other end to serve as the input station of the other one of the two printers; and wherein the control means is adapted to control operation of the two printers such that only one sheet resides within the tray at any given time.

## Patentansprüche

1. Drucksystem zur Verwendung mit einem oder mehreren, mit einem Mikroprozessor arbeitenden Computern (16) zum Drucken von Farbgraphiken und monochromen Texten auf Blätter, mit
einem Farbdrucker (10) zum Drucken von Farbgraphiken - und
einem Textdrucker (11) zum Drucken von Text,
**gekennzeichnet** durch
eine Verbindungsvorrichtung (14), die den Farb- und den Textdrucker lösbar verbindet, um die zu bedruckenden Blätter von dem einen Drucker zu dem anderen zu transportieren,
eine Interpretierer-Vorrichtung (111) zum Empfangen der Druckinformation von einem mit einem Mikroprozessor arbeitenden Computer und zum Trennen der Druckinformation in Farbinformation und Monochrom-Information, und
eine Steuervorrichtung zum Steuern des Farbdruckers (10) zum Drucken der Farbinformation und zum Steuern des Textdruckers (11) zum Drucken nur der Monochrom-Information, so daß die Graphik- und die Textinformation auf demselben Blatt gedruckt werden, wobei die Blätter zwischen den Druckoperationen von einem Drucker zu dem anderen transportiert werden.

2. Drucksystem nach Anspruch 1, bei dem der Farbdrucker (10) ein Tintenstrahldrucker, ein Thermodrucker oder ein elektrophotographischer Drucker ist.

3. Drucksystem nach Anspruch 1 oder 2, bei dem der Textdrucker (11) ein Laserdrucker ist.

4. Drucksystem nach einem der Ansprüche 1 bis 3, bei dem die Steuervorrichtung mit der Interpretierer-Vorrichtung (111) verbunden ist und eine Sensorvorrichtung (75) zum Abfühlen des Verfahrweges eines Blattes auf der Verbindungsvorrichtung (14) aufweist, um Signale vorzusehen, die das Drucken durch den Textdrucker verhindern.

5. System nach einem der Ansprüche 1 bis 4, bei dem der Farbdrucker (10) Farb-Graphikinformation mit einer schrittweisen Bewegung und der Textdrucker (11) Text mit einem kontinuierlichen Bewegung druckt.

6. Drucksystem nach einem der Ansprüche 1 bis 5, bei dem die Verbindungsvorrichtung (14) zum Halten nur eines einzelnen, zu bedruckenden Blattes ausgelegt ist.

7. Drucksystem nach einem der Ansprüche 1 bis 6, bei dem der Farbdrucker dem Textdrucker vorangeht oder folgt.

8. Drucksystem nach einem der Ansprüche 1 bis 7, bei dem die Interpretierer-Vorrichtung (111) einen im Farbdrucker (10) angeordneten Mikroprozessor aufweist, und das ferner ein Interpretierer und einen ersten und einen zweiten mit dem Interpretierer verbundenen Daten-Speicher-Puffer aufweist, um Farbdruckinformation bzw. Monochrom-Textinformation zu speichern.

9. Drucksystem nach einem der Ansprüche 1 bis 8, bei dem das Drucksystem sequentiell mit einem einzigen, mit einem Mikroprozessor arbeitenden Computer oder seriell mit mehreren mit einem Mikroprozessor arbeitenden Computern druckt.

10. Drucksystem nach einem der Ansprüche 1 bis 9, bei dem der Farbdrucker (10) eine Blatt-Trocknungsvorrichtung (47) aufweist, die ein Blatt entweder vor dem Drucken trocknet oder so angeschlossen ist, daß sie ein Blatt sowohl vor dem Drucken als auch nach dem Drucken trocknet.

11. Drucksystem nach Anspruch 10, bei dem der Farbdrucker eine Blattransportvorrichtung (61, 62, 65, 66) aufweist, die so angeschlossen ist, daß sie ein Blatt durch die Trocknungsvorrichtung (47) vor dem Drucken in eine Richtung und während des Druckens und nach dem Drucken in die andere Richtung transportiert.

12. Drucksystem nach einem der Ansprüche 1 bis 11, bei dem die Interpretierer-Vorrichtung (111) die Farbinformation von der Monochrom-Information trennt und zum Drucken im Farbdrucker nur Farbinformation und zum Drucken im Textdrucker nur Monochrom-Information verwendet.

13. Drucksystem nach einem der Ansprüche 1 bis 12, bei dem die Steuervorrichtung mindestens einen Sensor (75) aufweist, um den Verfahrweg des Blattes in der Verbindungsvorrichtung abzufühlen und dem Textdrucker zu signalieseren, den Druckbetrieb zu unterbinden.

14. Drucksystem nach Anspruch 11, bei dem die Blatttransportvorrichtung Blätter durch den Farbdrucker in der Druckrichtung schrittweise weiterschaltet und in der Nicht-Druckrichtung Blätter kontinuierlich zuführt.

15. Drucksystem nach Anspruch 10, bei dem die Trocknungsvorrichtung (47) parallele Platten (48, 49) aufweist, die zum Erwärmen gegenüberliegender Seiten eines sich bewegenden Blattes montiert sind.

16. Verfahren zur Verwendung mit einem oder mehreren mit einem Mikroprozessor arbeitenden Computern (16) zum Drucken von Farbgraphiken und monochromen Texten, **gekennzeichnet** durch
Trennen von Druckinformation in Farbgraphikinformation und Textinformation, Liefern nur der Textinformation an einen Textdrucker (11) zum Drucken und nur der Farbgraphikinformation an einen Farbdrucker (10) zum Drucken,
Zuführen eines Blattes zu einem ersten der Drucker, Ausführen einer ersten Druckoperation auf dem Blatt in dem ersten der Drucker,
Ausgeben des Blattes von dem ersten der Drucker zu dem zweiten der Drucker und
Ausführen einer zweiten Druckoperation auf dem Blatt in dem zweiten der Drucker.

17. Verfahren nach Anspruch 16, bei dem das Verfahren mit einem Mikroprozessor arbeitenden Computer ausgeführt wird, um die Farbgraphiken und den Text abhängig von Befehlen von dem mit dem Mikroprozessor arbeitenden Computer getrennt zu drucken, und bei dem die erste und die zweite Druckoperation abhängig von Befehlen von dem mit dem Mikroprozeßor arbeitenden Computer ausgeführt werden.

18. Verfahren nach einem der Ansprüche 16 bis 17, bei dem der Farbdrucker (10) schrittweise und der Textdrucker (11) kontinuierlich druckt.

19. Verfahren nach einem der Ansprüche 16 bis 18, bei dem ein Blatt vor und nach dem Drucken im Farbdrucker erwärmt wird.

20. Verfahren nach einem der Ansprüche 16 bis 19, bei dem der Farbdrucker (10) mit einem Tintenstrahlmotor, durch thermische Übertragung oder durch ein elektrographisches Verfahren druckt.

21. Verfahren nach einem der Ansprüche 16 bis 20, bei dem der Textdrucker (11) mit einem Laserdruckverfahren druckt.

22. Verfahren nach einem der Ansprüche 16 bis 21, bei dem Farbgraphik- und monochromen Textblätter sequentiell gedruckt werden, wobei der erste Drucker ein Farbdrucker ist, mit den folgenden Verfahrenschritten:
thermisches Vorstabilisieren des Blattes im Farbdrucker (10),
Steuern der Druckinformation, um auf dem Blatt im Farbdrucker nur Farbgraphiken zu drucken,
Erwärmen des bedruckten Blattes nach dem Drucken der Farbgraphik ausreichend, um das Verschmieren der Tinte zu vehindern, wenn das Blatt mit einem Antriebsrad in Berührung kommt,
Transportieren des erwärmten Blattes vom Farbdrucker zu einem Textdrucker (11) und
Steuern der Druckinformation, um im Textdrucker nur monochromen Text auf das Blatt zu drucken, wobei ein Blatt mit sowohl aufgedrucktem Text als auch aufgedruckter Graphik erzeugt wird.

23. Verfahren nach einem der Ansprüche 16 bis 24, bei dem Blätter vor dem Drucken im wesentlichen kontinuierlich in einer Richtung durch einen Trockner (47) transportiert werden und bei dem die Blätter während des Farbdruckens und nach dem Farbdrucken schrittweise durch den Trockner in die entgegengestzte Richtung weitergeschaltet werden.

24. Drucksystem nach Anspruch 1, bei dem die Verbindungsvorrichtung (14) ein Tablett aufweist, das mit einem Ende mit einer Ausgabestation einer der beiden Drucker verbunden werden kann und dessen anderes Ende als Eingabestation des anderen der beiden Drucker verwendet werden kann, und bei dem die Steurvorrichtung den Betrieb der beiden Drucker so steuern kann, daß zu einem beliebigen Zeitpunkt nur ein Blatt auf dem Tablett liegt.

## Revendications

1. Système d'impression destiné à être utilisé avec un plusieurs ordinateurs (16) à base de microprocesseur pour imprimer des graphiques en couleur et du texte monochrome sur des feuilles, comportant :
une imprimante couleur (10) pour imprimer les graphiques couleur, et
une imprimante de texte (11) pour imprimer du texte,
caractérisé en ce que ledit système comporte en outre :
des moyens intercalaires (14) qui relient de manière amovible les imprimantes couleur et de texte pour transporter les feuilles à imprimer d'une première imprimante vers l'autre imprimante, des moyens (111) formant interpréteur destinés à recevoir une information d'impression provenant d'un ordinateur à base de microprocesseur et pour séparer l'information d'impression en information couleur et information monochrome, et
des moyens de commande pour commander l'imprimante couleur (10) pour imprimer une information couleur et pour commander l'imprimante de texte (11) pour imprimer uniquement une information monochrome de telle sorte que l'information de graphiques et de texte est imprimée sur la même feuille, les feuilles étant transportées depuis une première imprimante jusqu'à l'autre entre les opérations d'impression.

2. Système d'impression selon la revendication 1, dans lequel l'imprimante couleur (10) est une imprimante du type à jet d'encre, du type à transfert thermique ou du type électro-photographique.

3. Système d'impression selon la revendication 1 ou 2, dans lequel l'imprimante de texte (11) est une imprimante laser.

4. Système d'impression selon l'une quelconque des revendications 1 à 3, dans lequel les moyens de commande sont reliés aux moyens (111) formant interpréteur et comportent des moyens (75) formant capteur destinés à détecter le trajet d'une feuille sur les moyens intercalaires (14) pour fournir des signaux empêchant l'impression par l'imprimante de texte.

5. Système d'impression selon l'une quelconque des revendications 1 à 4, dans lequel l'imprimante couleur (10) imprime une information de graphiques couleur avec un mouvement incrémentiel et l'imprimante de texte (11) imprime du texte avec un mouvement continu.

6. Système d'impression selon l'une quelconque des revendications 1 à 5, dans lequel les moyens intercalaires (14) sont adaptés pour ne contenir qu'une seule feuille à imprimer.

7. Système d'impression selon l'une quelconque des revendications 1 à 6, dans lequel l'imprimante couleur précède ou succède à l'imprimante de texte.

8. Système d'impression selon l'une quelconque des revendications 1 à 7, dans lequel les moyens (111) formant interpréteur sont constitués d'un microprocesseur situé dans l'imprimante couleur (10), et qui comporte en outre un interpréteur et des première et seconde mémoires tampons de stockage de données reliées à l'interpréteur pour stocker respectivement une information d'impression couleur et une information de texte monochrome.

9. Système d'impression selon l'une quelconque des revendications 1 à 8, dans lequel ledit système d'impression imprime de manière séquentielle à l'aide d'un seul ordinateur à base de microprocesseur, ou en série avec plusieurs ordinateurs à base de microprocesseur.

10. Système d'impression selon l'une quelconque des revendications 1 à 9, dans lequel l'imprimante couleur (10) comporte des moyens (47) de séchage de la feuille agissant pour sécher une feuille avant l'impression ou reliés pour sécher une feuille après l'impression aussi bien qu'avant impression.

11. Système d'impression selon la revendication 10, dans lequel l'imprimante couleur comporte des moyens (61, 62, 65, 66) de transport d'une feuille reliés pour transporter une feuille à travers les moyens (47) de séchage dans une direction avant impression et dans la direction opposée pendant et après impression.

12. Système d'impression selon l'une quelconque des revendications 1 à 11, dans lequel les moyens (111) formant interpréteur séparent l'information couleur de l'information monochrome et utilisent uniquement l'information couleur pour faire imprimer l'imprimante couleur et uniquement l'information monochrome pour faire imprimer l'imprimante de texte.

13. Système d'impression selon l'une quelconque des revendications 1 à 12, dans lequel les moyens de commande comportent au moins un capteur (75) pour détecter le déplacement d'une feuille sur les moyens intercalaires et pour envoyer un signal à l'imprimante de texte pour empêcher les opérations d'impression.

14. Système d'impression selon la revendication 11, dans lequel les moyens de transport d'une feuille indexent de manière incrémentielle les feuilles à travers l'imprimante couleur dans la direction d'impression et alimentent en continu les feuilles dans la direction non imprimante.

15. Système d'impression selon la revendication 10, dans lequel les moyens (47) de séchage comportent de plaques parallèles (48, 49) agencées pour chauffer des côtés opposés de la feuille se déplaçant.

16. Procédé d'utilisation d'un ou de plusieurs ordinateurs (16) à base de microprocesseur pour imprimer des graphiques en couleur et du texte monochrome, caractérisé en ce qu'il comporte les étapes consistant à :
séparer une information d'impression en information de graphiques couleur et en information de texte, fournir uniquement l'information de texte à une imprimante de texte (11) pour la faire imprimer et uniquement l'information de graphiques couleur à une imprimante couleur (10) pour la faire imprimer,
alimenter une feuille vers une première des imprimantes,
exécuter une première opération d'impression sur la feuille dans la première des imprimantes,
délivrer la feuille à partir de la première des imprimantes vers la seconde des imprimantes, et
exécuter une seconde opération d'impression sur la feuille dans la seconde des imprimantes.

17. Procédé selon la revendication 16, dans lequel ledit procédé est utilisé avec des ordinateurs à base de microprocesseur pour imprimer de manière séparée lesdits graphiques couleur et ledit texte en réponse à des commandes provenant de l'ordinateur à base de microprocesseur, et dans lequel lesdites première et seconde opérations d'impression sont mises en oeuvre en réponse à des commandes provenant de l'ordinateur à base de microprocesseur.

18. Procédé selon l'une quelconque des revendications 16 ou 17, dans lequel l'imprimante couleur (10) imprime de manière incrémentielle et l'imprimante de texte (11) imprime en continu.

19. Procédé selon l'une quelconque des revendications 16 à 18, dans lequel une feuille est chauffée dans l'imprimante couleur à la fois avant et après impression.

20. Procédé selon l'une quelconque des revendications 16 à 19, dans lequel l'imprimante couleur (10) imprime à l'aide d'un dispositif à jet d'encre ou d'un transfert thermique ou d'une technique électrographique.

21. Procédé selon l'une quelconque des revendications 16 à 20, dans lequel l'imprimante de texte (11) imprime à l'aide d'une technique d'impression laser.

22. Procédé selon l'une quelconque des revendications 16 à 21, dans lequel les feuilles de graphiques couleur et de texte monochrome sont imprimées de manière séquentielle, la première imprimante étant une imprimante couleur, comportant en outre les étapes consistant à :
préstabiliser thermiquement la feuille dans ladite imprimante couleur (10),
commander l'information d'impression pour imprimer uniquement des graphiques couleur sur la feuille située dans l'imprimante couleur,
après impression de graphiques couleur, chauffer la feuille imprimée de manière suffisante pour éviter des tâches d'encre lorsque la feuille est captée par une roue d'entraînement,
entraîner la feuille chauffée à partir de l'imprimante couleur jusqu'à l'imprimante de texte (11), et
commander une information d'impression pour imprimer uniquement du texte monochrome sur la feuille située dans l'imprimante de texte, produisant ainsi une feuille ayant à la fois du texte et des graphiques qui y sont imprimés.

23. Procédé selon l'une quelconque des revendications 16 à 22, comportant les étapes consistant à :
transporter les feuilles de manière générale en continu dans une direction à travers un sécheur (47) avant l'impression couleur et indexer de manière incrémentielle les feuilles à travers le sécheur dans la direction opposée pendant et après l'impression couleur.

24. Système d'impression selon la revendication 1, dans lequel les moyens intercalaires (14) sont constitués d'un plateau adapté à une extrémité pour être relié à un poste de sortie d'une des deux imprimantes et également adapté à son autre extrémité pour servir de poste d'entrée de l'autre des deux imprimantes, et dans lequel les moyens de commande sont adaptés pour commander le fonctionnement des deux imprimantes de telle sorte qu'uniquement une feuille se trouve dans le plateau à tout moment donné.
